# EUROPEAN PATENT APPLICATION

(11) **EP 3 141 307 A1**
(43) Date of publication of application: **15.03.2017**
(21) Application number: 14891379.1
(22) Date of filing: 05.05.2014
(51) Int. Cl.: B09C 1/02, B08B 3/08, B60P 1/00

(54) **CLOSED-CIRCUIT MOBILE SYSTEM FOR RECOVERING CONTAMINATED SOILS AND PROCESS FOR RECOVERING CONTAMINATED SOILS**

(71) Applicant: Odc Ambievo Tecnologia E Inovação Ambiental Indústria e Comercio de Insumos Naturalis Ltda., 13211-840 Jundiai, SP (BR)
(72) Inventor: LOUREIRO PECORARO, Fernando, 05716-150 Sao Paulo (BR)
(74) Representative: Fletcher, Matthew James Edwin
(86) International application number: PCT/IB2014/000674
(87) International publication number: WO 2015/170131

(57) **Abstract**

The present abstract relates an invention patent for a closed-circuit mobile system for recovering contaminated soils, belonging to the field of the combating environmental pollution; said system essentially comprising:
1) - A step of washing the contaminated soil SC (block 1) which consists essentially of removing the contaminated soil SC from the place of origin O and homogenizing it under high pressure with washing solution SLAV composed of water + washing product PL based on modified terpenes and/or terpenoids; provided by compact washing equipment (1) installed close to the place of origin O of the contaminated soil SC, wherein the recovered soil SR is backfilled; and
2) - A recovery step carried out with centrifugal clarifier (10) and centrifuge (20) (block 2), wherein recovered contaminants CR and recovered washing product PLR are produced, the latter being recycled to make up washing solution SLAV; the recovered contaminants CR being reused in process P that originated same or other;

Said steps (1) and (2) of the process P which originated the contaminated soil SC, the means for providing washing solution SLAV, and the outlets for recovered soil SR from step (1) and for recovered contaminants CR and recovered washing product PLR from step (2) forming a closed circuit, which does not substantially produce disposable material(s).

## Description

### INTRODUCTION

The present invention relates to a closed-circuit mobile system for recovering contaminated soils, belonging to the field of combating environmental pollution and was developed for recovering contaminated soils, particularly with mineral oil residues, hydrocarbons (petroleum) and the like and for reuse of the recovered soil, the waste removed therefrom and the product used in the recovery.

The closed-circuit mobile system of the present invention eliminates the transportation of polluting materials and allows the recovery of contaminated soil in situ. A process for recovering contaminated soils by means of a washing product by modified terpenes is also described.

### PRIOR ART

Numerous activities are strong environmental pollution generators, occurring in soils, water resources (rivers, lakes, sea, ground water) and air, often reaching levels that affect or compromise life and/or habitability and/or other activities at the contaminated site. As a result, many steps have been taken to recover the already polluted regions, to combat pollution sources, to prevent or substantially minimize the continuity of pollution. In addition, more restrictive laws, more severe actions by regulators, pressure from society, the search for new technologies that can change the current form of interaction between people and the environment, among others, are occurring.

As the responsibility for proper treatment and disposal of waste lies with the polluter, such as companies or others, there is now a search for technical and economically appropriate solutions. Furthermore, environmental companies have appeared, operating in the field of destination and treatment of this waste. It turns out that these companies or other entities or other arrangements to accomplish this task do not have all the solutions and often use outdated technologies with high total costs. It is believed that in 15 years 50% of technologies that will be used in this sector do not exist today. That is, it is an industry that needs new technologies and services at competitive costs.

It is worth noting that the matter is not simple and waste management is especially one of the most complex environmental issues, because the growing industrialization of countries still in the development stage led to the generation of waste in regions not always prepared to process it or at least to store it properly.

Waste may be classified according to several criteria. As for its physical characteristics, it can be dry (paper, plastic, leather, metal, glass, etc.) or wet (food scraps, fruits, vegetables, etc.). It is also classified as organic or inorganic according to its chemical composition. Concerning its origin, it may household, commercial, public, or hospital waste, as well as industrial, radioactive, agricultural or work debris waste, and originate from ports, airports and bus terminals.

NBR 10004, issued by the Brazilian Technical Standards Association (ABNT), has established a classification of potential risks to the Environment and Public Health. Classified as Class I - Hazardous - solid residues that requires special treatment and disposal due to its flammability characteristics, corrosivity, reactivity, toxicity and pathogenicity. Class II -- Non-inert waste - encompasses waste that is not hazardous, but is not inert, i.e., can have properties such as combustibility, water solubility and biodegradability. This is basically waste with the characteristics of household waste. Class III - Inert waste - encompasses waste that, when subjected to solubilization tests (NBR 10007, issued by ABNT), does not have any of its constituents solubilized at concentrations above the water potability standards. Much of this waste is recyclable. This waste does not degrade or otherwise decompose when disposed of on the soil.

Therefore, observing the standards, it is noted that one of the major problems to be treated within industries; railways; construction sites and others is soil contamination, especially with mineral oils, Class I Risk. There are several technologies available for these contaminants not to represent an environmental problem. However, the costs involved are high either because of transportation issues, or the need of temporary specific infrastructure or processing time.

Existing technologies for the treatment and destination of contaminated soils have various disadvantages in terms of costs and time.

In all cases of soil contamination, current decontamination processes require that the soil is removed from the site and stored for further processing. This storage requires a minimum of preparation of the material packing area to prevent any migration of contaminants to other non-contaminated sites, because of rain and other factors. The material is then transported to its final destination. The final destination may comprise a landfill or thermal desorption or co-processing or biological or washing treatment. For the contaminated area to return to its original features, new soil without contamination needs to replace the removed soil, which involves the use of clean soil deposits and transport to the treated area.

It turns out that the transport stages involve no return costs, time to process and CO2 emissions. The processing steps according to the type of waste and clean soil acquisition from deposits entail cost and environmental disadvantages: Landfills lead to unused waste, additional costs and increased environmental liabilities. Desorption and Co-Processing result in additional cost and CO2 emissions. Others also entail time, generate effluents and unused waste.

The technologies currently used for the treatment and disposal of waste are described below:

### Landfills

Landfills are large areas where the waste is stacked in multiple layers and covered with earth. In this environment, waste is biodegraded and, in many cases, methane gases produced by the organic biodegradation are used for power generation. Much of this waste is recyclable. This waste does not degrade or otherwise decompose when disposed of in the soil. Depending on the type of waste classification, the landfill disposal costs vary greatly, and in some cases (such as soil contaminated by mineral oil) disposal in landfills is prohibited. Some environmental companies have landfills that range in classes as shown above. These actives end up being shared between environmental companies, since not all have such facilities.

### Thermal Desorption

Thermal Desorption is a process that aims to treat soils contaminated with hydrocarbons such as gasoline, diesel fuel, fuel oil, kerosene, among others, reducing or eliminating their concentration to levels that allow the soil disposal in its place of origin or a new use. It is a recovery technology that uses energy to physically separate the soil volatiles in order to decontaminate the same for reuse. It is a physical separation process involving thermal energy for heating the waste until decontamination occurs. Heating of water and organic compounds adsorbed on the solid matrix causes desorption of the same to the surface of the soil particle. Maintaining the supply of energy to water and organic compounds causes the change of state of these materials to the gas phase. The exhaust system is responsible for the transport of gaseous compounds into the gas treatment system, in the post-combustion chamber (CPC), where there is oxidation of gaseous contaminants. Thermal desorption equipment is designed to heat the contaminated solid material at a temperature sufficient for the organic components to be volatilized, with no change in their physical properties, decontaminating the solid matrix. The volatilized waste follows to the post-combustion chamber where it will be thermally destroyed. This process does not always remove all contaminants from the soil, and its use involves a reclassification of the waste causing it to be land-filled.

### Co-Processing

This is a thermal destruction technology of waste in cement kilns, involving the waste energy use or its use as raw material in the cement industry without affecting the quality of the end product. To this end, the waste is subjected to blending, which involves mixture and homogenization, ensuring good operating performance and adequate characteristics of the end product. It is a solution applicable to a wide range of liquid, solid and pasty waste generated in industrial activities like petrochemical, chemical, assemblers, auto parts, electronics, iron and steel industry, metallurgy, metal-mechanics, pulp and paper.

However, environmental companies do not have the assets (cement kilns) for this work. Blending is usually done by environmental companies, which, after the analysis of the cement, send the blends to burn.

### Biological treatment

Two main types of biological treatment are cited biopiling and land farming.

The Biopiling system consists of oxygenation of small portions of vertically superposed soil, thus accelerating the biodegradation of waste. This technology involves the construction of cells or piles of contaminated soil so as to stimulate aerobic microbial activity within the pile through aeration. Microbial activity can be increased by adding moisture and nutrients such as nitrogen and phosphorus. Bacteria degrade hydrocarbons adsorbed on soil particles, thereby reducing their concentration. Typically, biopiles are built on an impermeable base to reduce the potential migration of leachate into the subsurface environment. A network of perforated ducts installed in the bottom of the pile and connected to a compressor ensures perfect aeration of the assembly. Sometimes a collection system is built for leachate, especially when a moisture addition system is used. The cells are generally coated with plastic to prevent release of contaminants to the atmosphere and to protect them from the weather.

The Land Farming system is more applied to waste that have a chemical composition of organic compounds in high concentrations.

Waste is incorporated into the soil which will trigger a complex exchange between microorganisms and organic matter in the waste, and determine the biological degradation, detoxification, transformation and immobilization of the constituents of waste, minimizing the risk of environmental contamination. The result is effective and is given at the top level of the soil, thus preserving groundwater, as there is a waterproofing layer below this level. The soil as part of the process should be understood as its active layer, or rather, where the microorganism colonies are.

These microorganisms are responsible for assimilating the organic matter of the waste for their own use, turning it into increasingly simple compounds until the end product of their metabolism is achieved (CO2 and H2O) and inorganic species of nitrogen, phosphorus and sulfur and other substances which were partially degraded into harmless or less harmful intermediates than the starting compound, which can be absorbed by the soil or disposed of into the atmosphere as gases. Both processes require specific projects for treatment sites, and equipment, in addition, long time for soil recovery. A process like this can last more than 01 year to eliminate organic waste, leaving the soil ready for disposal in a landfill class II.

### Washing

Soil washing can be simple or biological.

Simple washings use clean water sprayed onto contaminated soil, promoting the entrainment of soil contaminants to water. As this process has a limitation, there is the need to associate a detergent at a later washing stage for the complete removal of soil residues. As this detergent cannot be left in the ground, a further washing cycle with water is necessary to remove this residual detergent. The washing process is a simple transfer of soil residues into the liquid medium. This liquid effluent must be sent to treatment stations so that the contaminants are reduced before the final disposal.

The technologies used for biological cleaning of contaminated soil and hazardous solid waste have as main object the transfer of contaminants from solid to liquid phase. The biological washing methods may process a comprehensive range of organic pollutants such as aromatics and solvents. The process is conducted in a dense liquid phase and depends on mechanical processes to separate particles containing contaminants which are adsorbed by fine particles and organic carbon instead of high granulometry particles.

The number of washing sessions may vary according to the characteristics of the waste. The wastewater resulting from the process is sent for treatment in an effluent treatment plant. On the other hand, biowashed solid residues are sent to industrial landfills, after confirmation of laboratory analysis.

### Incineration

Incineration is a thermal destruction process performed under high temperature - 900-1200°C, with controlled residence time - and used for the treatment of highly hazardous waste, or which require safe and complete destruction. In this technology, thermal decomposition occurs via high temperature oxidation of the organic portion of the waste, transforming it into a gaseous phase and another solid phase, reducing the waste volume, weight and hazardous characteristics. The slag and ash are disposed in landfill, the wastewater is sent to the treatment plant and the gases from the burning are treated and monitored under the following parameters: flow, temperature, 02 levels, CO and also NOx , SOx and particulate matter ratios.

Most processes and technologies shown above end up being used as a pre-cleaning step before a final disposal of solid waste in landfills and before sending the liquid effluents to treatment. That is, each process has its advantages, but the costs associated with the chain are still high, because they do not eliminate the use of other treatment systems. In addition, high value-added products that are contaminating the soil are treated as waste and have their actual value depreciated.

Another problem observed with conventional processes is the fact that they often demand unique assets and that are shared among competing environmental companies (landfill class I and II, incinerators, wastewater treatment plants, etc.) which may constitute an obstacle, and indicates low system capacity and the need for new investments, which may result in increased costs to the detriment of companies that generate waste and therefore of society as a whole.

Such difficulties of conventional processes led to the need for new solutions to combat pollution, particularly the decontamination of soils contaminated with waste from mineral oils, hydrocarbons and others.

In search of a more viable solution for waste cleaning, a few patent applications may be cited, which seek to provide a more efficient cleaning system, such as the present application, including WO95/11766, PI91072211, PI9306520-5, WO92/09378 and PI0209201-8.

Among the patents cited above, PI91072211 refers to a terpene-based closed system for cleaning metal products, especially during its manufacture, conferring lower roughness of the clean surface, thus optimizing the painting of that surface.

By means of a system of consecutive baths in terpene solution, PI9306520-5 seeks to eliminate contaminants insoluble in water, and the process is said to be made of any material without restrictions, targeted to food or industrial products, either in production or finished products.

WO92/09378 uses a system for cleaning soldering flux that uses a terpene solution wherein the article is dipped for removal of contaminants. This system enables the recovery of the washing solution by gravitational difference, which involves not using the system until separation occurs.

PI0209201-8 relates to a substrate cleaning system using an organic solvent and pressurized fluid solvent cleaning wherein cleaning is done by dipping the contaminated article in a barrel with the organic solvent.

As can be seen above, the concern with the removal of contaminants, especially organic contaminants, is growing, and increasingly seeking more efficient solutions for cleaning and disposal of contaminants, but very little has been studied in relation to soil cleaning.

Patent application WO95/11766 proposes a mobile soil cleaning system based on biological cleaning, that is, on the use of microorganisms for elimination of hydrocarbons or derivatives thereof from the soil. The mobile system is based on a structure that can be assembled and disassembled with an approximate size of a container that allows the entry of trucks for disposal of contaminated soil. As it is a biological process, the cleaning time is extended, requiring the use of water enriched with mineral salts and heated, which requires the use of energy, and the assembly and disassembly procedure of the structure requires specific equipment and more time. It was found that at the end of the process the use of terpenes improves the outcome.

### OBJECTS OF THE INVENTION

Thus, an objective of the present invention is to provide a novel washing system for soil contaminated with hydrocarbons and the like which overcomes the problems and limitations of the existing usual means for that purpose.

Another objective is to provide a simple and efficient system, performed at room temperature and that may be carried out at the site of contamination.

Another objective is to provide a system that can be implemented with simple equipment, with a closed system, thereby eliminating the generation of effluents.

Another objective is to provide a system that enables the recovery and reuse of treated soil, of the waste removed therefrom and the washing products.

### BRIEF DESCRIPTION OF THE INVENTION

In view of the problems described above with the usual processes for the treatment of contaminated soil and in order to overcome them and to meet the abovementioned objects, a closed-circuit mobile system was developed for recovering contaminated soils, the subject matter of the present application, which comprises two essential steps: the step of washing the contaminated soil and the step of recovery; said washing step essentially comprised of homogenizing the contaminated soil with soil washing product based on a mixture of terpenes and/or terpenoids with the active obtained substantially according to patent application PI 0903082-4 of the same applicant and the recovery step comprising recovering residues of contamination and soil washing product, such that: the recovered soil exhibits a level of recovery that allows it to be backfilled to the site of contamination; the contamination residues exhibit a level of recovery that enables them to be reused in the process to which they belonged or otherwise; and the washing product exhibits a level of recovery that allows it to be reintroduced into the soil washing step. Such system thus configuring a closed-circuit soil recovery system substantially without disposal of materials which is mounted inside a truck, thus being portable.

Terpenes, used in the system, are products used in cleaning and other activities. Its first use as a cleaning agent occurred 40 years ago to replace the chlorinated products. With the aim of developing technologies following the concepts of nature itself (nature tech), the applicant has developed a product line that is based on modified terpenes and/or terpenoids. The terpenes are synthesized by plants and found mainly in essential oils. The applicant has developed technology by modification of the terpenes derived from widely available sources on the market (d-limonene, turpentine) which enables the potentiation of solvency actions, neutralizing odors, anti-microbial actions, and others.

With these modified terpenes and/or terpenoids, the applicant has developed specific products that have a more powerful action than the initial bases from which they are derived, obtaining highly effective products at lower concentrations, and potentiating the desired action of the end product.

Among these products, there is a soil cleaner, based on modified terpenes and/or terpenoids, obtained via oxidation of the process described in patent application PI 0903082-4, of the same applicant, which provides different features that enabled the development of the present system, such as:
- Cold hydrocarbon removal, that is, the products can be used at room temperature. In addition, they can be handled without great risk, they do not consume energy for heating and maintaining the temperature of the product to obtain an efficient removal.
- Cold emulsion breaking - formulations, when in contact with oil, generate an emulsion in aqueous solution with great ease. Furthermore, in view of the high affinity of the modified terpenes for water, breaking this emulsion terpene solution/oil occurs without the use of heat or energy. This generates two fractions which separate by density difference; the removed oil is supernatant and the terpene solution is below this oil layer. With this, the removed oil can be reused or have other desired destination and the terpene solution may return to the cleaning process. The terpene solution does not lose its degreasing power and can be used in a continuous manner, requiring only the replacement of the new solution in view of loss caused by spills and vaporization.
- Biodegradable - the formulations are biodegradable, and in 20 days in the environment, 94% of the total is biodegraded into smaller molecules that do not affect the environment.
- Low toxicity - products obtained from renewable sources, with a health-friendly concept, causing no impact to people and the environment.

Because of these characteristics, it was possible to create a closed-circuit process for removing hydrocarbons from the soil, with significant cost savings and reduced steps compared to conventional processes.

Based on these characteristics the soil recovery product based on modified terpenes and/or terpenoids and seeking to solve some critical points in the conventional processes for soil recovery, the applicant has developed a process that enables:
- Treatment of contaminated soil on site - using an innovative process, involving high and at the same time simple technology, the applicant has created a process with high processing capability which is portable, that is, a plant that may be brought to the contamination site to treat the soil on site. This eliminates the transport of contaminated material and the risks associated with it, eliminating waste transportation costs.
- Removal of hydrocarbons to levels below that of the intervention - with the process, there is removal of contaminants so as to make possible the return of the soil to its place of origin. This eliminates the need to purchase soil from deposits for replacement of the removed soil, bringing an additional advantage in terms of costs and logistics.
- Elimination of liquid effluents - in conventional washing processes, there is only the transfer of waste from solid to liquid medium. In the process described in the present application, the product used in soil washing is used in a closed circuit, not generating disposal for further treatment of contaminated liquid effluent.
- Recovery of contaminants - in many cases, the contaminants are high value-added products which, by some accident or procedure, end up being discarded as waste because they are contaminating the soil. This system enables the recovery of this contaminant that can be returned to the process from which it derived and used again as a high value-added product.

All this, therefore, solves the problems and technical limitations observed in conventional soil recovery system, thus meeting the main objective of the present invention.

In addition to solving the problems and limitations of conventional systems, the present system has further advantages over these systems related to the reuse of the soil, the contaminating waste and the washing product, not forming disposable materials, according to another object of the invention.

The characteristics of the present system, particularly related to the use of low-cost and reusable washing product; simple procedural steps that can be performed using an equally simple plant that is easily transportable to the contamination site; with reuse of the treated soil, eliminating the replacement of soil at the contamination site; and with reuse of the contaminant residue in the process to which they belong or others enable the presently claimed system to have low cost, thus meeting another object of the invention.

### LIST OF FIGURES

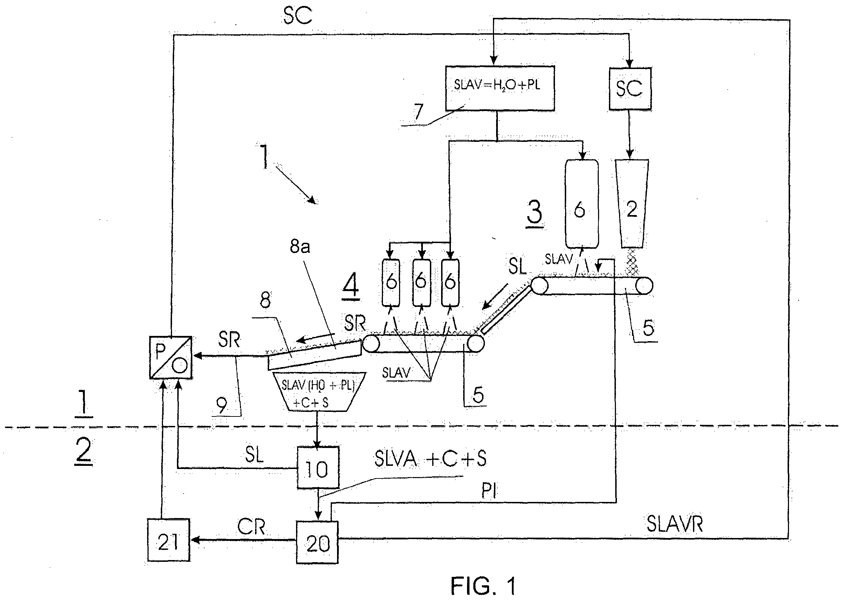

FIGURE 1 - is a detailed representation of the closed-circuit washing process (1) wherein the contaminated soil (SC) is stored in a suitable location (2), then is poured on a mobile conveyor (5) wherein the washing solution (SLAV) stored in (7) is added by means of high pressure jet (6) completing the washing step (3); in the recovery step (4) the contaminated soil and the washing solution pass through the rinsing process (8) which comprises three screens (8a), the larger particles of the soil already recovered (SR) are transferred and can be backfilled (9) while the finest part passes through the clarification process (10) wherein part of the soil is again recovered and the remaining passes through a centrifuge (20) wherein the recovered contaminant is stored for further use (21), the recovered washing solution (SLAVR) is separated and reused, and a third intermittent purging stream (PI) occurs at a specific outlet whereto the solids are sent and can be added to washed soil SL in the washing process.

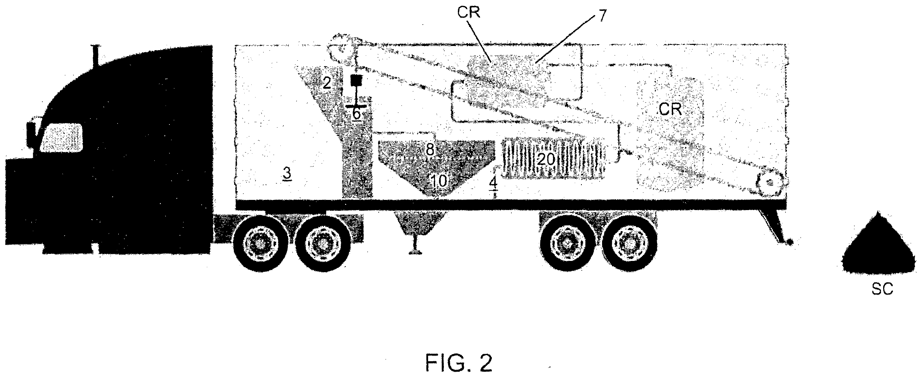

FIGURE 2 - is a simplified representation of the mobile system installed within a truck where the contaminated soil (CS) is sent and stored in an appropriate location (2) after receiving the washing solution via pressurized jets (6) completing the washing step (3); in the recovery step (4) the contaminated soil and the washing solution pass through the rinsing process (8) wherein the fine part of the soil passes through the clarification process (10) and what has not been separated from the contaminants passes through the centrifugation process (20), the washing solution with contaminants is then transferred to separating tank wherein the washing solution is then stored (7) for reuse in the process and the recovered contaminants are stored in the appropriate place for further use.

### DETAILED DESCRIPTION BASED ON THE DRAWINGS

As illustrated by the abovementioned figures and described in the present invention, the system object of the present application is intended to recover soil contaminated with mineral oils, hydrocarbons (petroleum) and the like and is comprised essentially of two steps (Fig. 1):
1) - Step of washing the contaminated soil SC (1) consisting essentially of removing the contaminated soil SC from the place of origin O and homogenizing it under high pressure with washing solution SLAV composed of water + washing product PL based on modified terpenes and/or terpenoids which active is obtained according to patent application PI 0903082-4 of the same applicant, washing product PL which is also the subject of another patent application of the same applicant;
2) - Step of recovery (4) made with centrifugal clarifier 10 and centrifuge 20 of the soil washing unit; said 2) - recovery step in which the recovered contaminants CR are obtained and taken from contaminated soil SC and recovered washing product PLR, this being reused to compose the washing solution SLAV used in step 1 of soil washing; and the recovered contaminants CR are reused in process P from which they originate or others;

Said steps 1 and 2, the process P originator of contaminated soil SC; means for supplying the washing solution SLAV; and the outlets of recovered soil SR from step 1 as well as outlets of recovered contaminants CR and recovered washing product PLR from step 2 composing a closed circuit and not originating disposable material(s).

The washing product PL based on modified terpenes and/or terpenoids obtained according to patent application PI 0903082-4 is also the subject matter of another patent application of the same applicant and used in the present washing process, being comprised essentially of: mixtures obtained by oxidation of d-limonene; surfactants with emulsifying function; and water as vehicle.

In one aspect, said mixture of terpenes and/or terpenoids comprises: d-limonene, d-carveol, 1-carveol carvone, limonene oxide, limonene epoxide, phellandrene, terpendiol, terpineol, dihydroxy-carvone, or mixtures thereof.

In another aspect, said mixture of terpenes and/or terpenoids comprises: limonene, its isomers and/or oxygenated derivatives.

The surfactants are non-ionic of food grade 20 having 1 to 20 carbon atoms in its chain, and preferably, but not limited to: ethoxylated alcohols, polyol esters or polyethylenes, alkyl polyglucosides, ethoxylated polyol esters and polysorbates.

The washing product PL with such characteristics enables the completion of the washing process as described above in essence.

The present invention also relates to a process for recovering contaminated soils, comprising the steps of:
1. Removing contaminated soil SC from the place of origin O and placing it in a storage means (2) so that said SC is fed into conveyors (5);
2. Spraying the washing solution SLAV by means of a washing subassembly (3) and promoting homogenization of contaminated soil SC with the washing solution SLAV; and
3. Subjecting the contaminated soil to homogenization with the washing solution in a recovery subassembly, comprising at least one vibrating screen (8), a centrifugal clarifier (10) and a centrifuge (20) for recovery of the following materials: (i) recovered soil SR, (ii) recovered washing solution SLAVR and (iii) recovered contaminant CR.

Particularly, the process for recovering contaminated soils of the present invention consists of the following sub-steps:
i. Removing contaminated soil SC from the place of origin O and placing it in a storage means (2) so that said SC is fed into conveyors (5);
ii. Subjecting a water-based washing solution (SLAV) and washing product based on modified terpenes and/or terpenoids to a pressure of 3000 to 20000 KPa in contaminated soil (CS);
iii. Checking emulsion formation consisting of washing solution SLAV and contaminants mixed with the soil particles;
iv. Subjecting the emulsion obtained in step iii above to a final rinsing in a conveyor at a pressure of 20 to 1000 KPa for fine removal of residual contaminants;
v. Promoting the resultant solution on a recovery subassembly, comprising at least one vibrating screen (8), a centrifugal clarifier (10) and a centrifuge (20) for recovering the recovered soil SR, the recovered washing solution SLAVR and the recovered contaminant CR; and
vi. Storing the washed soil SL for later return to the place of origin O.

More specifically, the soil recovery system and process of the invention comprise the following steps:

The step of soil washing comprising mainly the steps of (Fig. 1):
1) - Removal of contaminated soil from its place of origin;
2) - Storage of contaminated soil in a suitable location (2) next to the washing machine;
3) - Washing the soil under high pressure (6) consisting of feeding the contaminated soil into an appropriate washing equipment supplied with washing solution made from water and washing product based on modified terpenes and/or terpenoids (7); said equipment performing:
   3.1) - Homogenization under high pressure between the contaminated soil and the washed product based on modified terpenes and/or terpenoids, which is made by spraying under high pressure of the washing product on the soil until breaking up the agglomeration of the soil particles. Better explaining, so that there is an efficient removal of contaminants, the washing product based on modified terpenes and/or terpenoids needs to be homogenized with these contaminants. As the contaminated soil, especially that with higher clay content, are well packed, there must be a way to promote this contact. The process of the present invention uses a high-pressure equipment that sprays the product on the contaminated soil. This pressure is selected to break up agglomerations of particles and take the washing product to a large surface area. The pressure varies from 3000-20000 KPa.
   3.2) - Formation of emulsion comprising water, washing product based on modified terpenes and/or terpenoids and contaminants, mixed with soil particles. With the application of high pressure washing product (3000-20000 kPa) in the contaminated soil, the washing product emulsifies the contaminants (hydrocarbons) contained in the soil;
   3.3) - Final rinsing in conveyors. The soil already washed is subjected to a final rinsing conveyor wherein the washing product based on modified terpenes and/or terpenoids is again placed in contact with the soil particles for fine removal of residual contaminants. This rinsing is performed in sprayed solution screens at low pressure (200 to 1000 kPa) on the soil already washed displaced in the conveyor.
4) - Separation of the solution (water + washing product + contaminants) in the soil (8) made on vibrating screens with a negative gradient (0 to -60°);
5) - Storage of the washed soil for later return to the place of origin.

The effective washing parameters of steps 3.1, 3.2 are in the correct adjustment of the washing solution flow of about 5 to 20 m3/h for capacities of up to 10 tons/hour of contaminated soil; with washing pressure in the range 3000-20000 KPa. The effective final rinsing parameters of step 3.3 consist of the rinsing solution flow at about 10 to 20 m3/h for capacity of up to 10 tons/hour of contaminated soil, rinsing solution pressure of 200-1000 KPa, number of rinsing screens of 1-3 screens.

Recovery step 2 is comprised of:
6) - Clarification (10). The solution comprising water, washing product based on modified terpenes or terpenoids, contaminants and the solid suspended material is subjected to clarification to separate the liquid phase from the solid phase, constituted by soil particles that are joined to the stored soil 5.
7) - Centrifugation (20). A solution composed of the washing product based on modified terpenes or terpenoids + contaminants is centrifuged separating the washing product based on modified terpenes or terpenoids, which is returned (7) to the washing step (3) and the recovered contaminants, which are forwarded once again to the originating process (21) or other destinations.

The equipment that implements the soil recovery system of the invention is essentially according to the scheme shown in Figure 2.

The equipment is a compact unit composed of: washing equipment that performs step 3 of soil washing; and a centrifugal clarifier 10 and centrifuge 20 that perform step 4 of recovery.

The washing equipment consists essentially of:
A storage means (2) receiving the contaminated soil SC (hopper);
   - Washing subassembly 3, receiving the contaminated soil SC from hopper (2);
   - Final rinsing subassembly (8) that receives the washed soil SL from the washing subassembly 3; said subassemblies 3, 4 basically comprised of respective soil transporters; sprayers 6 spraying high pressure washing solution SLAV (water + PL washing product based on modified terpenes and/or terpenoids) on the contaminated soil SC, which circulates in the conveyor of the washing subassembly 3 and sprays with a lower pressure on the washed soil SL, which circulates in the conveyor of the final rinsing subassembly 8;
   - Feed means 7 of the washing solution SLAV (washing product PL + water);
   - Vibrating screen 8 that separates the emulsion formed by water, the washing solution SLAV + contaminants C from the recovered soil SR;

The washing equipment is a compact unit that has its active components mounted in a truck, exhibits little volume and low weight of about 2000 kg and approximate size of a container (12.2 m) allowing easy transport and installation next to the contamination site.

The centrifugal clarifier 10 works in the outlet of the emulsion composed of the washing solution SLAV (H20 + PL) + contaminants C from washing equipment 1 and performs the clarification that aims to remove most of suspended solids contained in said emulsion. The emulsion in this stage of the process contains water, modified terpenes, hydrocarbons removed from the contaminated soil and a percentage between 10% and 30% of suspended solids having particle diameter less than 0.56 mm. This clarification process is done by means of a centrifugal clarifier, of the two outlet streams type: washed solids outlet SL, having moisture content between 11% and 20%, which is joined to the recovered soil SR and a water solution outlet, PL modified terpenes, hydrocarbons C and a percentage lower than 2% of suspended solids S (clay) which binds the centrifuge 20.

The centrifuge 20 performs centrifugation, the last stage of the recovery process of the washing solution SLAV, which will be sent back to the washing process of new contaminated soil. Centrifugation is performed by a vertical centrifuge having three stages. The mixture, upon leaving the clarification process 10, is fed to the centrifuge 20 wherein the hydrocarbon that contaminated the soil is recovered (recovered contaminant CR) and sent to a storage tank 21. The recovered washing solution SLAVR (modified terpene emulsion + water) is sent to the feed tank 7 of the washing process for reuse. A third PI (intermittent purging) stream occurs at a specific outlet to which the solids are sent and can be added to the washed soil SL in the washing process.

Thus, in the present system, the compact unit formed by soil washing equipment 1, centrifugal clarifier 10 and centrifuge 20, contaminated soil feed means 2, feed means 7 of the washing solution SLAV, the place of origin O, from which the contaminated soil SC is remove and the process P from which the contaminants C originate are arranged substantially in a closed circuit and so as not to form disposable waste, unlike the conventional soil recovery process.

In fact, there are a series of costs in conventional processes. The most significant costs are variable and relate to the technology applied and the transport. Transportation costs may be the highest in the chain because, depending on the place of origin of the contaminated soil and their place of destination, these values may reach more than 50% of the composition of the costs. That is, in the worst case more than 50% of the costs do not add anything to the process but greater risks (displacement of hazardous waste) and higher CO2 emissions.

The process object of the present invention, in turn, eliminates the need for transport, as the waste is treated in situ and after its treatment it can be returned to its place of origin. In addition, hydrocarbons are recovered and, as they have market value, they can add a revenue component to the equation. That is, the claimed process reduces the steps that add costs and adds a revenue component.

The presently claimed soil recovery system, in fact, consists of an innovative model that can modify the current market rules bringing advantages for environmental companies, thus favoring a more effective fight against pollution for the benefit, ultimately, society as a whole.

According to the new concept proposed in the system object of the invention, the contaminated soil is brought to the washing process, this process generates clean soil, and the oil and washing solution based on modified terpenes and/or terpenoids are recovered, and the clean soil is backfilled at the place of origin. The recovered oil can provide revenue for the process and the recovered washing solution based on modified terpenes and/or terpenoids can be reused in the washing process, and there may be occasional disposal of the modified terpenes and/or terpenoids solution in the order of 0.025 m3/ton of recovered soil.

Having described preferred embodiments, it should be understood that the scope of the present invention encompasses other possible variations, and is limited only by the content of the appended claims, which include all possible equivalents.

## Claims

1. Closed-circuit mobile system for recovering contaminated soils **characterized by** comprising:
(a) A storage means (2) that receives the contaminated soil SC and is circulated on a conveyor (5) towards the washing subassembly;
(b) A washing subassembly (3) including:
b.1 - a feed means (7) containing a washing product and water (SLAV);
b.2 - at least one sprayer (6) receiving the washing solution SLAV from the feed means SLAV (7), wherein spraying occurs at high pressures of said SLAV at the contaminated soil SC from the conveyor 5 described in step (a);
b.3 - a rinsing subassembly (4) on a conveyor (5) comprising at least one sprayer (6) receiving the washing solution SLAV from the SLAV feed means (7), wherein spraying occurs at low pressures of said SLAV at the contaminated soil SC from the conveyor (5) as described in step (a).
(c) A recovery subassembly (2) including:
c.1 - at least one vibrating screen (8) separating the emulsion formed by water + SLAV + contaminants C from recovered soil SR, wherein the SR is sent (9) to the process of origin(P/O);
c.2 - a centrifugal clarifier (10) containing an outlet for solids washed SL and another outlet for the washing solution, contaminants and suspended solids (S);
c.3 - a centrifuge (20) for recovering the recovered contaminant CR and the recovered washing solution (SLAVR) wherein CR is sent to a storage tank (21) and SLAVR is recirculated to the feed tank SLAV (7).

2. Closed-circuit mobile system for recovering soils according to claim 1, **characterized in that** the contaminated soil SC has the following contaminants:
mineral oils, hydrocarbons, petroleum, or mixtures thereof.

3. Closed-circuit mobile system for recovering soils according to claim 1, **characterized in that** the washing product (SLAV) of step b.1 comprises a modified terpenes and/or terpenoid solution and water.

4. Closed-circuit mobile system for recovering soils according to claim 3, **characterized in that** the solution of modified terpenes and/or terpenoids is from d-limonene oxidation, selected from: d-limonene, d-carveol, 1-carveol carvone, limonene oxide, limonene epoxide, phellandrene, terpendiol, terpineol, dihydroxy-carvone, or mixtures thereof.

5. Closed-circuit mobile system for recovering soils according to claim 3, **characterized in that** the washing product SLAV additionally comprises nonionic surfactants of food grade having 1 to 20 carbon atoms in its chain.

6. Closed-circuit mobile system according to claim 1, **characterized in that** at least one sprayer of step b.2 operates at a pressure of 3000 to 20000 KPa.

7. Closed-circuit mobile system according to claim 1, **characterized in that** at least one sprayer of step b.3 operates at a pressure of 200 to 1000 KPa.

8. Closed-circuit mobile system according to claim 1, **characterized in that** the centrifuge (20) additionally comprises a third PI stream for intermittent purging.

9. Closed-circuit mobile system for recovering soils according to claims 1 and 6, **characterized in that** the flow rate of the washing solution in step (b) comprises from about 10 to 20 m3/h for capacity of up to 10 tons/hour of contaminated soil at a pressure between 30 and 200 bar.

10. Closed-circuit mobile system for recovering soils according to claims 1 and 7, **characterized in that** the flow rate of the washing solution in step (b) comprises from about 10 to 20 m3/h for capacity of up to 10 tons/hour of contaminated soil at a pressure between 10 and 20 bar.

11. Closed-circuit mobile system for recovering soils according to claim 1, **characterized in that** the centrifugal clarifier (10) has two outlet streams, wherein the first outlet consists of washed solids SL with moisture content between 11 % and 20% which is joined to the recovered soil SR and the second outlet corresponds to the SLAV solution, hydrocarbons C and a percentage lower than 2% of suspended solids S that bind to the centrifuge (20).

12. Closed-circuit mobile system for recovering soils according to claim 1, **characterized in that** the centrifuge (20) has three stages and is vertically mounted performing centrifugation in which the contaminants C are recovered and sent to a storage tank (21) for reuse and wherein the recovered washing solution SLAVR is sent to the tank (7) for later reuse, further comprising a third stream (intermittent purging) that occurs in a specific outlet whereto the solids are sent and can be added to the washed soil SL in the washing process.

13. Closed-circuit mobile system for recovering soils according to claim 1, **characterized in that** the equipment composing the system is a compact unit comprised of: a washing subassembly (3) comprising at least one sprayer (6) and a recovery subassembly including at least one vibrating screen (8), a centrifugal clarifier (10) and a centrifuge (20).

14. A process for recovering contaminated soils, **characterized by** comprising the following steps:
1. Removing the contaminated soil SC from the place of origin O and placing it in a storage means (2) so that said SC is fed into conveyors (5);
2. Spraying the washing solution SLAV through a washing subassembly (3) and promoting homogenization of the contaminated with SC soil the washing solution SLAV; and
3. Subjecting the contaminated soil to homogenization with the washing solution in a recovery subassembly, comprising at least one vibrating screen (8), a centrifugal clarifier (10) and a centrifuge (20) for recovery of the following materials:
(i) recovered soil SR, (ii) recovered washing solution SLAVR and (iii) recovered contaminant CR.

15. A process for recovering contaminated soils according to claim 14, **characterized by** comprising the following sub-steps:
i. Removing the contaminated soil SC from the place of origin O and placing it in a storage means (2) so that said SC is fed into conveyors (5);
ii. Subjecting a water-based washing solution (SLAV) to a pressure of 3000-20000 KPa and a washing product based on modified terpenes and/or terpenoids in the contaminated soil (SC);
iii. Checking emulsion formation consisting of washing solution SLAV and contaminants mixed with the soil particles;
iv. Subjecting the emulsion obtained in step iii above to a final rinse in a conveyor to a pressure of 20 to 1000 kPa for fine removal of residual contaminants;
vii. Promoting the resultant solution on a recovery subassembly, comprising at least one vibrating screen (8), a centrifugal clarifier (10) and a centrifuge (20) for recovery of the recovered soil SR, of the recovered washing solution SLAVR and of the recovered contaminant CR; and
viii. Storing the washed soil SL for later return to the place of origin O.
